# EUROPEAN PATENT APPLICATION

(11) **EP 4 814 575 A1**
(43) Date of publication of application: **30.09.2026**
(21) Application number: 26157127.7
(22) Date of filing: 09.02.2026
(51) Int. Cl.: G03B 11/02, G03B 11/04, G03B 17/02

(54) **CAMERA SYSTEM**

(30) Priority: 25.03.2025 KR 20250038363
(71) Applicant: Otos Wing Co., Ltd., Seoul 08521 (KR)
(72) Inventor: HUH, Moon Young, 08521 Seoul (KR); HUH, Sung Won, 06084 Seoul (KR)
(74) Representative: AWA Sweden AB

(57) **Abstract**

A camera system may include a capturing unit including a camera configured to obtain a plurality of image frames, a shading unit including a shading cartridge structure arranged between the camera and a light source and configured to control light entering the camera, and a protection module arranged in front of the shading unit and configured to protect the shading unit and the camera and reflect at least a portion of light entering from the light source to the shading unit.

## Description

### BACKGROUND

### 1. Field

The disclosure relates to a camera system.

### 2. Description of the Related Art

During a welding process, a camera system may generate a welding image of the welding process and transmit the welding image to a welding robot, a welding monitoring device, or the like so as to identify a welding state. At this time, because the camera system generates and provides a welding image of a portion adjacent to welding light, it is not easy to recognize a specific welding situation, such as a welding environment. Therefore, it is necessary to enable the welding state to be accurately identified by providing high-definition images capable of visually identifying even the welding environment.

Furthermore, in case that the camera system generates the welding image, a strong light source of welding light may cause various problems while being reflected from a lens or sensor surface inside a camera. Therefore, there is a need to develop technology capable of controlling intensity of strong welding light entering a lens or a sensor so as to generate more accurate welding images.

### SUMMARY

The disclosure provides a camera system capable of controlling intensity of a strong light source of welding light entering a device.

However, this is only an example, and the technical problems to be solved by the disclosure are not limited thereto.

According to an aspect of the disclosure, a camera system may include a capturing unit including a camera configured to obtain a plurality of image frames, a shading unit including a shading cartridge structure arranged between the camera and a light source and configured to control light entering the camera, and a protection module arranged in front of the shading unit and configured to protect the shading unit and the camera and reflect at least a portion of light entering from the light source to the shading unit.

In some embodiments, the protection module may include a front frame arranged at a foremost side, a protection glass arranged adjacent to the front frame, and a rear frame arranged between the protection glass and the shading unit.

In some embodiments, the front frame may include a material which reflects at least a portion of the light entering from the light source.

In some embodiments, the rear frame may include a material which reflects at least a portion of the light entering from the light source.

In some embodiments, the camera system may further include a sensor unit configured to measure information about light entering from the light source, and a sensor filter arranged at a side of the shading unit and configured to control the light entering the sensor unit.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 illustrates a network environment of a camera system according to an embodiment;
FIG. 2 illustrates a configuration example of a camera system according to an embodiment;
FIG. 3 is a conceptual diagram illustrating a camera system according to an embodiment;
FIGS. 4 to 6 are conceptual diagrams illustrating a configuration example of a camera system according to an embodiment;
FIG. 7 is a conceptual diagram illustrating another example of a camera system according to an embodiment;
FIG. 8 is a conceptual diagram illustrating another example of a camera system according to an embodiment;
FIG. 9 is a block diagram for describing a method of controlling a filter unit in a camera system, according to an embodiment;
FIG. 10 is an exploded view of a camera system according to another embodiment; and
FIG. 11 illustrates functions of the camera system of FIG. 10.

### DETAILED DESCRIPTION

As the present description allows for various changes and numerous embodiments, certain embodiments will be illustrated in the drawings and described in detail in the written description. Effects and features of the disclosure, and methods of achieving them will be clarified with reference to embodiments described below in detail with reference to the drawings. However, the disclosure is not limited to the following embodiments and may be embodied in various forms.

Hereinafter, embodiments will be described in detail with reference to the accompanying drawings. When describing embodiments with reference to the accompanying drawings, the same or corresponding elements are denoted by the same reference numerals, and redundant descriptions thereof are omitted.

In the following embodiments, the terms "first," "second," etc. are not used in a restrictive sense and are used to distinguish one element from another.

The singular forms as used herein are intended to include the plural forms as well unless the context clearly indicates otherwise.

It will be understood that the terms "include" and/or "comprise" as used herein specify the presence of stated features or elements, but do not preclude the presence or addition of one or more other features or elements.

Furthermore, sizes of elements in the drawings may be exaggerated or reduced for convenience of explanation. For example, because sizes and thicknesses of elements in the drawings are arbitrarily illustrated for convenience of explanation, the disclosure is not necessarily limited thereto.

The x-axis, the y-axis, and the z-axis are not limited to three axes of the orthogonal coordinate system and may be interpreted in a broader sense. For example, the x-axis, the y-axis, and the z-axis may be perpendicular to one another or may represent different directions which are not perpendicular to one another.

In case that a certain embodiment is implemented differently, a specific process sequence may be performed differently from a sequence described herein. For example, two consecutively described processes may be performed substantially at the same time or performed in an order opposite to the stated order.

Hereinafter, a camera system according to the disclosure will be described in detail with reference to the accompanying drawings, based on the above-described principles.

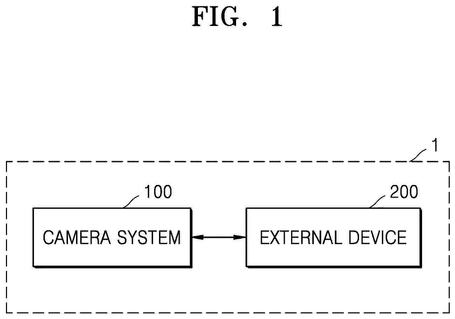

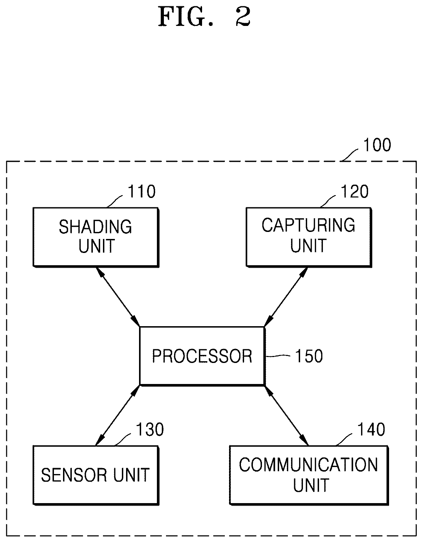

FIG. 1 illustrates a network environment of a camera system according to an embodiment, and FIG. 2 illustrates a configuration example of the camera system according to an embodiment.

Referring to FIG. 1, a network environment 1 of a camera system according to an embodiment may include a camera system 100 and an external device 200.

The camera system 100 according to an embodiment may generate a high-definition image of a work area and transmit the high-definition image to the external device 200 so as to allow a work state to be easily identified. The work area may be, for example, a welding area where a welding process is performed, but the disclosure is not limited thereto. Accordingly, the camera system 100 may be a welding camera system, but the disclosure is not limited thereto, and the camera system 100 may be other industrial camera systems.

The camera system 100 may receive a feedback signal generated based on the high-definition image and operate according to the feedback signal. The feedback signal may be, for example, a signal related to the control of the camera system 100, such as a capturing condition of a camera inside the camera system 100, or the operation or non-operation of the camera system 100.

The external device 200 may be, for example, a welding robot, a welding monitoring device (e.g., a personal computer (PC)), a mobile terminal (e.g., a smartphone), a welding torch, or welding goggles, but the disclosure is not limited thereto. The external device 200 may output the high-definition image received from the camera system 100. In case that the feedback signal generated based on the high-definition image is input, the external device 200 may control the camera system 100 by transmitting the feedback signal to the camera system 100.

The camera system 100 according to an embodiment may include a shading unit 110, a capturing unit 120, a sensor unit 130, a communication unit 140, and a processor 150.

The shading unit 110 may have a shading cartridge structure arranged between a camera and a light source and configured to control light which enters the camera. The shading cartridge structure may include a blackening filter and an anti-reflection coating layer arranged on at least one surface of the blackening filter. In an embodiment, the shading cartridge structure may further include a neutral density filter arranged in front of the blackening filter.

Because the shading cartridge structure is arranged between the camera and the light source so as to have a slope, unnecessary light reflected from the lens inside the camera by a strong light source may be reduced, and thus, a ghost phenomenon may be limited. The slope of the shading cartridge structure may be fixed at a specified angle, but the disclosure is not limited thereto, and the slope of the shading cartridge structure may be adjusted by the processor 150.

The shading unit 110 may further include a sensor filter (not shown). The sensor filter may be formed integrally with the shading cartridge structure, or may be formed separately from the shading cartridge structure. The sensor filter may be arranged on an imaginary line which connects the light source to the sensor unit 130 (e.g., an illuminance sensor), which enables control of light entering the sensor unit 130.

The capturing unit 120 may include a camera which obtains a plurality of image frames of the work area. The image frame may be, for example, a welding image frame. The camera may obtain a plurality of image frames based on light having passed through the shading cartridge structure (or the shading unit 110).

In an embodiment, the capturing unit 120 may further include a thermal imaging camera and may obtain a thermal image through the thermal imaging camera.

The capturing unit 120 may include one camera, but the disclosure is not limited thereto, and the capturing unit 120 may include two or more cameras.

The capturing unit 120 may repeatedly capture an image of a work area under different capturing conditions, including a shutter speed, international organization for standardization (ISO) sensitivity, and a gain value of the camera, under the control by the processor 150.

The sensor unit 130 may include a plurality of sensor modules configured to detect various pieces of information about the work area and obtain various pieces of information. The sensor unit 130 may include an illuminance sensor which detects the intensity of light within the work area (e.g., intensity of welding light, intensity of ambient light, etc.). The sensor unit 130 may further include, in addition to the illuminance sensor, various types of sensors such as a proximity sensor, a noise sensor, a video sensor, an ultrasonic sensor, and a radio frequency (RF) sensor, and may detect various changes related to a welding work environment.

In an embodiment, the sensor unit 130 may detect, for example, welding information. The welding information may include, for example, a welding temperature, a welding direction, a welding slope, a welding speed, and a gap between a workpiece and a welding torch with respect to real-time welding work.

The communication unit 140 is configured to communicate with various external devices 200 in accordance with various types of wired and wireless communication schemes. The communication unit 140 may include at least one of a Wireless Fidelity (Wi-Fi) chip, a Bluetooth chip, a wireless communication chip, or a Near Field Communication (NFC) chip. In particular, in case that the Wi-Fi chip or the Bluetooth chip is used, various pieces of connection information, such as a service set identifier (SSID) and a session key, may be transmitted and received, communication may be established by using the various pieces of connection information, and then, various pieces of information may be transmitted and received. The wireless communication chip refers to a chip which performs communication in accordance with various communication standards, such as Institute of Electrical and Electronics Engineers (IEEE), Zigbee, 3rd Generation (3G), 3rd Generation Partnership Project (3GPP), or Long Term Evolution (LTE). The NFC chip refers to a chip which operates in an NFC scheme using a 13.56 MHz band among various RF-ID frequency bands, such as 135 kHz, 13.56 MHz, 433 MHz, 860 MHz to 960 MHz, or 2.45 GHz.

As the welding light is detected through the sensor unit 130, the processor 150 may control at least one of the blackening filter, the neutral density filter, or the sensor filter, which is included in the shading cartridge structure, based on the intensity of the welding light.

The processor 150 may generate one or more merged images by synthesizing a plurality of image frames obtained through the camera, and transmit the one or more merged images as the high-definition image to the external device 200 through the communication unit 140. In this case, the processor 150 may generate a high-definition image by using a high dynamic range (HDR) technology and transmit the high-definition image to the external device 200 so as to accurately identify the welding state (e.g., information about the shape of welding beads, welding arc, and a surrounding environment other than an area adjacent to the welding light) through the high-definition image and provide feedback thereon.

In an embodiment, the processor 150 may generate a plurality of merged preprocessed images based on two or more image frames selected in accordance with a set criterion from among the plurality of image frames obtained at set intervals, and generate one or more merged images by synthesizing the plurality of merged preprocessed images. The two or more image frames may be consecutive image frames in time-series order. The processor 150 may generate the plurality of merged preprocessed images in parallel. The set criterion may include, for example, a specified number of image frames, selection of image frames of which pixel difference between other image frames (e.g., previous image frames) falls within a set pixel difference range, a change in the number of image frames based on the capturing conditions, and the like.

In an embodiment, the processor 150 may generate a first merged preprocessed image based on two or more first image frames selected from among the plurality of image frames in accordance with a set criterion, and generate a second merged preprocessed image based on two or more second image frames selected from among the plurality of image frames in accordance with a set criterion. The two or more first image frames and the two or more second image frames may include a set number or more of identical image frames (or a set number or more of different image frames). The processor 150 may generate a merged image by synthesizing the first merged preprocessed image and the second merged preprocessed image.

In addition, the processor 150 may transmit, to the external device 200, information (e.g., welding information) detected by the sensor unit 130, so as to identify a work area situation.

In an embodiment, the processor 150 may detect, for example, the welding temperature through the sensor unit 130, but the disclosure is not limited thereto.

In an embodiment, in case that the capturing unit 120 includes a thermal imaging camera, the processor 150 may obtain a temperature image of a work by synthesizing a thermal image obtained through the thermal imaging camera and an image of a welding site, and identify a welding temperature based on the temperature image.

The processor 150 may transmit, to the external device 200, the welding temperature detected by the sensor unit 130 and the welding temperature based on the temperature image, and may also calculate an average of the welding temperatures and transmit the average of the welding temperatures to the external device 200. In this case, the processor 150 may identify whether the welding temperature exceeds a set temperature range, a level corresponding to the welding temperature, or the like, and may transmit the identified information to the external device 200.

In case that the difference between the welding temperature detected by the sensor unit 130 and the welding temperature identified based on the temperature image is greater than or equal to a set value, the processor 150 may generate notification information (e.g., an abnormality message) and transmit the notification information to the external device 200.

In an embodiment, the information transmitted to the external device 200 may be output in various forms through, for example, an output unit (not shown) (e.g., a speaker, a display, etc.) inside the camera system 100.

The processor 150 may control the overall operation of the camera system 100. The processor 150 may execute programs stored in a memory (not shown) to control the shading unit 110, the capturing unit 120, the sensor unit 130, the communication unit 140, and the like so as to control the operation of the camera system 100.

The processor 150 may be implemented by using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electrical units for performing functions.

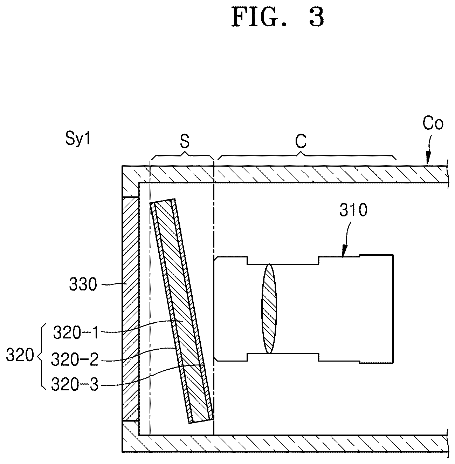

FIG. 3 is a conceptual diagram illustrating a camera system according to an embodiment.

Referring to FIG. 3, a camera system Sy1 according to an embodiment may include a capturing unit C including a camera configured to obtain an image frame by capturing an image of a welding area, and a shading unit S including a shading cartridge structure 320 arranged between a camera 310 and a welding light source and configured to control welding light entering the capturing unit C (or the camera 310).

The camera system Sy1 according to an embodiment may be implemented in the form of a camera, a camera unit, a camera module, a camera device, or the like, and such examples are not particularly limited.

For example, as in the structure described above, by arranging the shading unit S between the capturing unit C and the welding light source, an amount of welding light entering the capturing unit C may be controlled so that a clear welding image is captured.

The capturing unit C according to an embodiment may further include additional components for fixing and/or operating the camera 310, such as a camera fixing unit (to which no reference numeral is assigned) for fixing the camera 310, and such components are not particularly limited.

The shading unit S according to an embodiment may further include additional components for fixing the shading cartridge structure 320, such as a structure fixing unit (to which no reference numeral is assigned) for fixing the shading cartridge structure 320, and such components are not particularly limited.

The shading cartridge structure 320 according to an embodiment may perform a function of shading welding light generated during welding work. For example, in an optional embodiment, the shading cartridge structure 320 may adjust a shade based on welding light information detected by a sensor unit (not shown). In another optional embodiment, the shade may be adjusted based on welding light information detected by a separate photo sensor (not shown).

The shading cartridge structure 320 according to an embodiment may include, for example, a liquid crystal display (LCD) panel 320-1, the blackening density of which is adjustable according to the alignment direction of liquid crystals, as a blackening filter. The LCD panel 320-1 may be implemented as various types of panels or LCD panels, for example, a vertical align (VA) LCD panel, a twist nematic (TN) LCD panel, an in-plane switching (IPS) LCD panel, or the like. The disclosure is not limited to the above examples, and any LCD panel should be interpreted as falling within the scope of the disclosure as long as the LCD panel may be easily selected by those of ordinary skill in the art.

The shade (or the blackening density) of the shading cartridge structure 320 according to an embodiment may be automatically adjusted according to the brightness of the welding light. As described above, in case that the shade of the shading cartridge structure 320 is automatically adjusted according to the brightness of the welding light, the sensor unit (not shown) may be used.

The sensor unit (not shown) according to an embodiment may obtain welding light information by detecting the intensity of welding light and convert information about the intensity of the welding light, which is included in the welding light information, into a certain electrical signal. In case that the certain electrical signal is transmitted to a processor (not shown), the processor (not shown) may control the shade (or the blackening density) based on the intensity of the welding light.

The shading cartridge structure 320 according to an embodiment may change the shade of the LCD panel 320-1 in real time so as to correspond to the intensity of light generated from a welding surface at a welding work site, and the capturing unit C may capture a welding image in which a certain amount of welding light is shielded by the shading cartridge structure 320 installed at the front side.

Referring again to FIG. 3, the camera system Sy1 according to an embodiment may further include a cover part Co which is arranged in the outer area of the shading cartridge structure 320 and covers the outside of the shading cartridge structure 320. In an optional embodiment, the cover part Co may cover the shading cartridge structure 320 and the capturing unit C together.

The cover part Co according to an embodiment may include a light-transmitting member (to which no reference numeral is assigned), at least a portion of which is formed of a light-transmitting material. The welding light may be transmitted through the light-transmitting member (to which no reference numeral is assigned) and the shading cartridge structure 320, ultimately allowing the capturing unit C to capture the welding image.

The light-transmitting member (to which no reference numeral is assigned) according to an embodiment may include a cover plate 330 which is arranged on the front side of the shading cartridge structure 320 and protects the shading cartridge structure 320. The cover plate 330 may include a resin material capable of transmitting light, for example, polycarbonate (PC) or acrylic, and may be formed through injection molding or the like, but the disclosure is not limited to the above examples.

The shading cartridge structure 320 according to an embodiment may include the LCD panel 320-1 and an anti-reflection coating layer arranged on at least one surface of the LCD panel 320-1. In an optional embodiment, the anti-reflection coating layer may include a first coating layer 320-2 and a second coating layer 320-3, which are respectively arranged on a surface and an opposite surface of the LCD panel 320-1.

The camera system Sy1 according to an embodiment may further include a neutral density filter which is arranged in the shading cartridge structure 320 and reduces an amount of light together with the LCD panel 320-1 as the blackening filter. The neutral density filter may be arranged in front of the blackening filter, but the disclosure is not limited thereto.

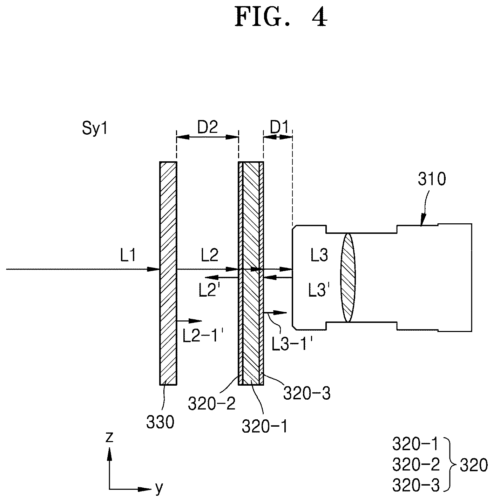

FIGS. 4 to 6 are conceptual diagrams illustrating a configuration example of the camera system Sy1 according to an embodiment.

Referring to FIG. 4, welding light L1 emitted from a light source passes through the cover plate 330. A ghost phenomenon may be minimized by reducing pieces of light reflected from the anti-reflection coating layers 320-2 and 320-3 arranged on at least one surface of the shading cartridge structure 320 among pieces of welding light having passed through the cover plate 330.

Specifically, by arranging the first coating layer 320-2, an amount of reflected welding light L2' may be minimized in case that some of pieces of light L2 transmitted through the cover plate 330 are reflected (L2'), and thus, an amount of welding light L2-1' which reaches the cover plate 330 and is reflected may also be minimized, thereby minimizing a primary ghost phenomenon.

In some embodiments, referring to FIG. 4, by providing the structure described above, in particular, by arranging the second coating layer 320-3, an amount of reflected welding light is minimized in a process in which welding light L3 having passed through the shading cartridge structure 320 is reflected (L3') from the camera and is then reflected (L3-1') from another surface of the shading cartridge structure 320, thereby minimizing a secondary ghost phenomenon.

The anti-reflection coating layers 320-2 and 320-3 according to an embodiment may be formed by applying a coating layer through, for example, vacuum deposition, sputtering, and/or wet coating, and drying and/or curing the coating layer. However, the disclosure is not limited to the forming and/or coating methods described above, and any method of forming and/or coating an anti-reflection coating layer should be interpreted as falling within the scope of the disclosure as long as the method may be easily selected by those of ordinary skill in the art.

The anti-reflection coating layers 320-2 and 320-3 according to an embodiment may be formed of and/or coated with, for example, magnesium fluoride (MgF₂), silicon (Si), and silicon dioxide (SiO₂), but the disclosure is not limited to the materials described above. Any material for the anti-reflection coating layers 320-2 and 320-3 should be interpreted as falling within the scope of the disclosure as long as the material may be easily selected by those of ordinary skill in the art.

In case that the reflectivity of the anti-reflection coating layers 320-2 and 320-3 according to an embodiment is excessively high, an amount of welding light transmitted through the shading cartridge structure 320 is not sufficient, which deteriorates the sharpness of the image. On the other hand, in case that the reflectivity of the anti-reflection coating layers 320-2 and 320-3 is excessively low, the efficiency of the anti-reflection coating layers 320-2 and 320-3 is reduced, which causes a problem in that a ghost phenomenon is not solved. Therefore, the reflectivity may be set to less than 4 %, or in another example, less than 3.5 % or less than 3.0 %, or in another example, less than 1.0 %.

A refractive index of each of the anti-reflection coating layers 320-2 and 320-3 according to an embodiment may be 1.3 to 1.36.

The anti-reflection coating layers 320-2 and 320-3 according to an embodiment may include a single layer or a plurality of layers, and at least two layers among the plurality of layers may have different refractive indices.

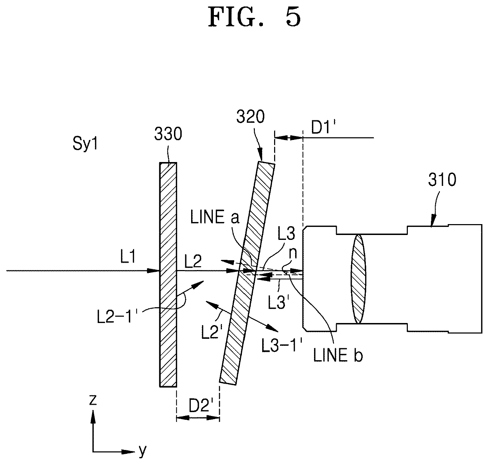

Referring to FIG. 5, the shading cartridge structure 320 according to an embodiment may be configured such that an imaginary first-1 line (line a) perpendicular to the main surface of the shading cartridge structure 320 crosses an imaginary second line (line b) which connects the camera to the light source (W). In this case, line b may be, for example, an optical axis.

The term "main surface" as used herein may refer to a widest surface in a film, a film structure, a thin-film, a membrane, a layer, or a structure having a wide surface similar thereto.

The term "light source" as used herein may refer to an object or a tool which emits light. For example, the term "light source" may refer to a place where welding is performed or an object which is to be welded and in which welding light is generated.

In case that line b and line a cross each other as in the structure described above, when welding light L2' reflected from a surface of the shading cartridge structure 320 reaches the cover plate 330 and is then reflected (L2-1'), the reflected light L2-1' is not directed toward the camera 310, which may minimize the primary ghost phenomenon described above (see FIG. 5).

In case that line b and line a cross each other as in the structure described above, even when welding light L3' reflected from an area of the camera 310 reaches the shading cartridge structure 320 and is then reflected (L3-1'), the reflected welding light L3-1' is not directed toward the camera 310, which may minimize the secondary ghost phenomenon described above (see FIG. 5).

According to an embodiment, an angle n formed by line b and line a may be set to be 0 degrees to 10 degrees. The above structure may minimize the ghost phenomenon even in case that welding light is reflected from the cover plate 330 and/or the shading cartridge structure 320.

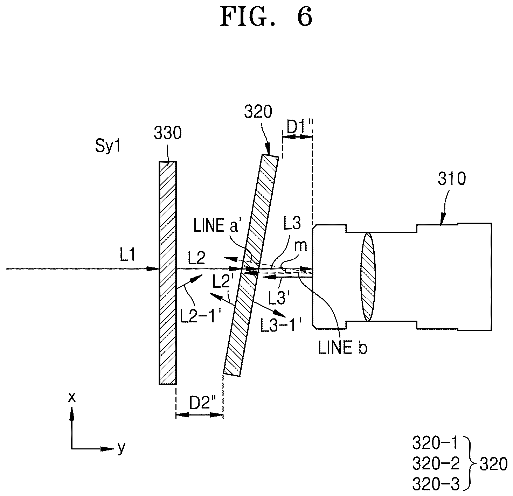

FIG. 5 illustrates a moving path of welding light in a y-z direction showing a lateral direction of the camera 310, and FIG. 6 illustrates a moving path of welding light in a y-x direction showing a vertical direction of the camera 310.

Referring to FIG. 6, the shading cartridge structure 320 according to an embodiment may be configured such that an imaginary first-2 line (line a') perpendicular to the main surface of the shading cartridge structure 320 crosses an imaginary second line (line b) which connects the camera 310 to the light source (W). In this case, line a, line a', and line b may cross each other.

For example, an angle m formed by line a' and line b may be determined independently of the angle n formed by line a and line b.

As in the structure described above, by varying the angle between the shading cartridge structure 320 and the camera 310 and/or the cover plate 330, a camera system capable of minimizing a ghost phenomenon may be provided by taking into account the position where the camera system is driven, the size of the welding environment, and the like.

Although not illustrated, the camera system Sy1 according to an embodiment may further include a control unit (not shown) which controls the angle n formed by line a and line b and/or the angle m formed by line a' and line b. In the camera system Sy1, a path through which welding light enters may vary depending on a place where the capturing unit is arranged. Such a structure may provide an effect of preventing a ghost phenomenon according to a position where the camera system Sy1 is used.

The camera system Sy1 according to an embodiment may further include a driving unit (not shown) which is arranged at a portion of the shading cartridge structure 320 and adjusts the arrangement angle of the shading cartridge structure 320. For example, the driving range of at least one of the angle n or the angle m may be at least 3 degrees.

For example, the control unit and the driving unit are not particularly limited, and any component capable of controlling an arrangement surface and/or an arrangement angle of a panel and/or a thin plate should be interpreted as falling within the scope of the disclosure as long as the component may be easily selected by those of ordinary skill in the art.

Referring again to FIG. 4, in an embodiment, a distance D1 between a portion of the shading cartridge structure 320 and the camera 310 may be less than a distance D2 between a portion of the shading cartridge structure 320 and the cover plate 330. Referring to FIG. 4, in an optional embodiment, D1 may refer to the distance between the second coating layer 320-3 and the camera 310. In another optional embodiment, D1 may refer to the distance between the second coating layer 320-3 and the lens of the camera 310.

Although not illustrated, in an optional embodiment, a portion of the shading cartridge structure 320 and a portion of the camera 310 may be brought into contact or close contact with each other. In another optional embodiment, a portion of the shading cartridge structure 320 and a portion of the lens of the camera 310 may be brought into contact or close contact with each other. In case that D1 is made small as in the structure described above, an amount of welding light L3' reflected from the camera 310 may be minimized, and thus, a ghost phenomenon may be minimized.

Referring again to FIG. 5, in an embodiment, a minimum distance D1' between a portion of the shading cartridge structure 320 and the camera 310 may be less than a minimum distance D2' between a portion of the shading cartridge structure 320 and the cover plate 330.

Although not illustrated, in an optional embodiment, a portion of the shading cartridge structure 320 and at least a portion of the camera 310 may be brought into contact or close contact with each other. In case that D1' is made small as in the structure described above, an amount of welding light L3' reflected from the camera 310 may be minimized, and thus, a ghost phenomenon may be suppressed.

Referring again to FIG. 6, in an embodiment, a minimum distance D1" between a portion of the shading cartridge structure 320 and the camera 310 may be less than a minimum distance D2" between a portion of the shading cartridge structure 320 and the cover plate 330.

Although not illustrated, in an optional embodiment, a portion of the shading cartridge structure 320 and at least a portion of the camera 310 may be brought into contact or close contact with each other. In case that D1" is made small as in the structure described above, an amount of welding light L3' reflected from the camera 310 may be minimized, and thus, a ghost phenomenon may be suppressed.

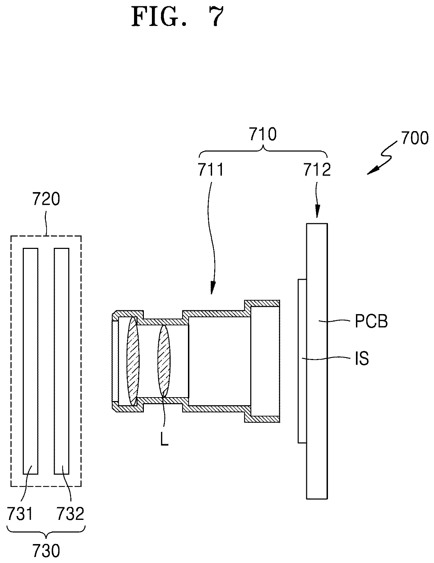

FIG. 7 is a conceptual diagram illustrating another example of a camera system 700 according to an embodiment.

Referring to FIG. 7, the camera system 700 may include a camera 710 and a shading cartridge structure 720.

The camera 710 may include a lens assembly 711 and a substrate assembly 712.

The lens assembly 711 may include an actuator and one or more lenses accommodated in the actuator. The actuator may include an autofocus actuator and/or a shake compensation actuator. The autofocus actuator and the shake compensation actuator may be integrally provided as a single body.

The substrate assembly 712 may have a structure in which an image sensor IS is coupled on a printed circuit board (PCB) substrate on which a conductive wiring pattern is formed.

The shading cartridge structure 720 may include a filter unit 730.

The filter unit 730 may perform a function of shading welding light generated by a welding work. The camera 710 may use the filter unit 730 to capture a welding image in which a certain amount of welding light is shielded. The filter unit 730 may be positioned in front of the camera 710. Specifically, the filter unit 730 may be arranged in front of the lens which receives light from a subject.

In an embodiment, the filter unit 730 may include a blackening filter 732. The blackening filter 732 may shade welding light generated when a worker welds. For example, the blackening filter 732 may increase the shade of the blackening filter 732 by performing blackening based on welding light information detected by a sensor unit (see the sensor unit 130 of FIG. 2), for example, an optical sensor. In this case, the blackening filter 732 may include, for example, a liquid crystal protection panel (an LCD panel), the blackening density of which is adjustable according to the alignment direction of liquid crystals. However, the disclosure is not limited thereto, and the blackening filter 732 may be implemented as various panels, including a VA LCD, a TN LCD, and an IPS LCD.

The blackening density of the blackening filter 732 may be automatically adjusted according to the presence or absence of the welding light or the intensity of the welding light. As described above, in case that the blackening density of the blackening filter 732 is automatically adjusted according to the brightness of the welding light, a sensor unit (see the sensor unit 130 of FIG. 2) may be used. The optical sensor of the sensor unit 130 may obtain welding light information by detecting the presence or absence of the welding light or the intensity of the welding light, and may convert information about the intensity of the welding light, which is included in the welding light information, into a certain electrical signal. The sensor unit 130 may transmit the converted electrical signal to a processor (see the processor 150 of FIG. 3), and the processor may control the blackening density based on the intensity of the welding light.

For example, the blackening filter 732 may change the shade of the panel in real time to correspond to intensity of light generated from the welding surface at the welding work site, and the camera 710 may capture a welding image in which a certain amount of welding light is shielded by the blackening filter 732 installed on the front side.

In another embodiment, the filter unit 730 may further include a neutral density filter 731. The neutral density filter 731 may reduce the amount of welding light generated when a worker welds and then transmit the welding light to the camera 710. The neutral density filter 731 may reduce the amount of welding light according to a preset neutral density. For example, in case that the neutral density filter 731 with a neutral density of 50 % is applied, the amount of welding light may be reduced more than in case that the neutral density filter 731 with a neutral density of 15 % is applied.

The filter unit 730 may have a structure in which the neutral density filter 731 is replaceable. When necessary, the neutral density filter 731 with a different neutral density may be replaced and used.

In another embodiment, the neutral density filter 731 may be a digital filter, the neutral density of which is controlled by the processor. Like the blackening filter 732, the neutral density filter 731, which is a digital filter, may increase the shade of the neutral density filter 731 by increasing the neutral density based on welding light information detected by a sensor unit (see the sensor unit 130 of FIG. 2), for example, an optical sensor.

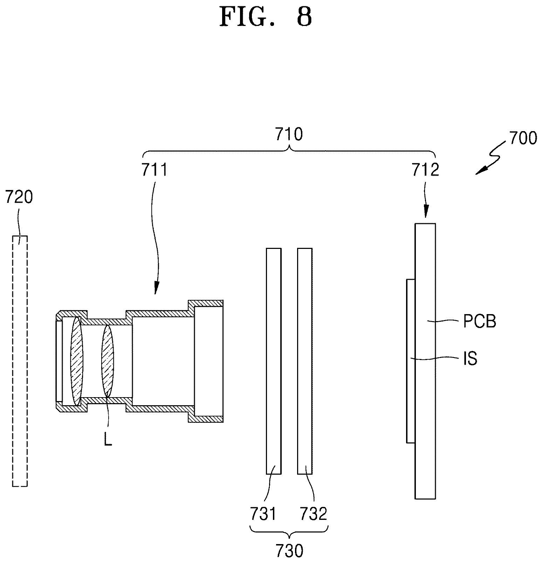

In another embodiment, referring to FIG. 8, the filter unit 730 may be coupled to the camera 710. In this case, the shading cartridge structure 720 may include a liquid crystal protection panel (an LCD panel), the blackening density of which is adjustable, but the disclosure is not limited thereto, and the shading cartridge structure 720 may include a general panel, the blackening density of which is fixed or is not adjusted. Even in this case, a ghost phenomenon may be minimized through an anti-reflection coating layer arranged on a surface of the general panel.

The filter unit 730 may be arranged on a path along which light moves within the camera 710, more specifically, a lens assembly 711. That is, the filter unit 730 may be arranged in front of the lens assembly 711 within the camera 710, between the shading cartridge structure (see 320 of FIG. 3) and the camera 710, or in front of the shading cartridge structure, but the disclosure is not limited thereto, and the filter unit 730 may be arranged between the lens assembly 711 within the camera 710 and an image sensor IS and perform a function of blocking light. In other words, the filter unit 730 may form an exterior by using a separate housing and may be coupled to the camera 710. The filter unit 730 may be coupled in front of the camera 710 (or, the shading cartridge structure), or may be arranged and coupled between the lens assembly 711 of the camera 710 and the image sensor IS. In another embodiment, the filter unit 730 may be formed integrally with the lens assembly 711 of the camera 710. The blackening filter 732 and the variable neutral density filter 731 of the filter unit 730 may be arranged on an optical axis of a lens L and coupled to a single housing. In this case, the filter unit 730 may be formed in a circular shape which is similar to a shape of the lens L. However, the disclosure is not limited thereto, and the filter unit 730 may be formed in a shape which is different from a shape of the lens L, for example, in a rectangular shape. In this case, the lens assembly 711 may have an internal structure of a housing which may accommodate both the circular lens L and the rectangular filter unit 730.

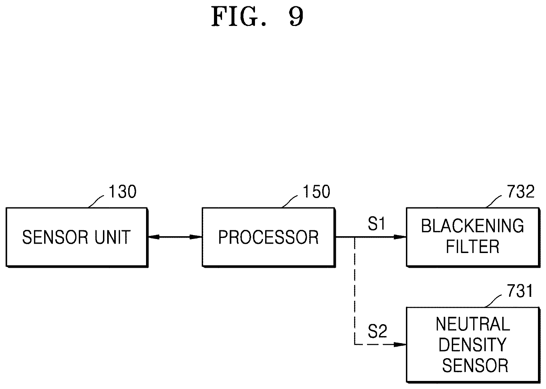

FIG. 9 is a block diagram for describing a method of controlling a filter unit in a camera system, according to an embodiment.

Referring to FIG. 9, the camera system may obtain information about welding light by a sensor unit 130. In this case, the sensor unit 130 may include an optical sensor (e.g., an illuminance sensor) to detect the presence or absence of the welding light or the intensity of the welding light. The sensor unit 130 may convert the presence or absence of the welding light or the intensity of the welding light into an electrical signal and transmit the electrical signal to a processor 150.

In case that the electrical signal is received from the sensor unit 130, the processor 150 may generate a control signal and transmit the control signal to the filter unit (730 of FIG. 7). In this case, the filter unit 730 may include a blackening filter 732 and a neutral density filter 731, which are controllable. The processor 150 may adjust both the blackening density of the blackening filter 732 and the neutral density filter 731 according to the detected intensity of the welding light. In an embodiment, in case that welding light is detected by the sensor unit 130 and is greater than a preset first intensity, the processor 150 may generate a first control signal S1 and a second control signal S2 and control both the blackening filter 732 and the neutral density filter 731 to operate. In some embodiments, in case that welding light is detected by the sensor unit 130 and is less than a preset first intensity and greater than a preset second intensity, the processor 150 may generate the second control signal S2 and control only the neutral density filter 731, or may generate the first control signal S1 and control only the blackening filter 732.

In some embodiments, in case that welding light is not detected by the sensor unit 130 or is less than the preset second intensity, the processor 150 may transmit the welding light to the camera (310 of FIG. 3) as it is, without separately controlling the neutral density filter 731 or the blackening filter 732.

As described above, by arranging the filter unit capable of shading welding light in front of the camera, the camera system according to an embodiment may obtain a welding image in which a certain amount of welding light is shielded, without processing a separately captured image. In some embodiments, the camera system may include the blackening filter and the neutral density filter to control the blackening density or the neutral density according to the presence or absence of the welding light or the intensity of the welding light, and thus, the shade may be effectively controlled.

In some embodiments, the processor 150 may further control a sensor filter (not shown) based on the intensity of the welding light detected by the sensor unit 130, so as to adjust the blackening density of the sensor filter. For example, in case that the detected welding light is greater than the preset first intensity, the processor 150 may generate a third control signal S3 to control the sensor filter to operate, so that the amount of light transmitted to the sensor unit 130 is reduced.

In an embodiment, the processor 150 may adjust the blackening density of the sensor filter to be equal to the blackening density of the blackening filter 732, based on the intensity of the detected welding light, but the disclosure is not limited thereto, and the processor 150 may adjust the blackening density of the sensor filter to be different from the blackening density of the blackening filter 732. For example, in case that the result of subtracting the preset first intensity from the detected welding light is less than a preset reference value, the processor 150 may adjust the blackening density of the blackening filter 732 to be equal to the blackening density of the sensor filter, and in case that the result of subtracting the preset first intensity from the detected welding light is greater than or equal to the preset reference value, the processor 150 may adjust the blackening density of the sensor filter to be higher than the blackening density of the blackening filter 732.

In an embodiment, the processor 150 may adjust the blackening densities of the blackening filter 732 and the sensor filter based on the intensity of the detected welding light, and may adjust the blackening densities differently based on a size ratio of the sensor filter to the blackening filter 732. For example, as the size ratio of the sensor filter to the blackening filter 732 is smaller, the processor 150 may adjust the blackening density to be lower. In some embodiments, the blackening density of the sensor filter may be controlled by the processor 150, but the disclosure is not limited thereto, and the sensor filter may have a preset blackening density.

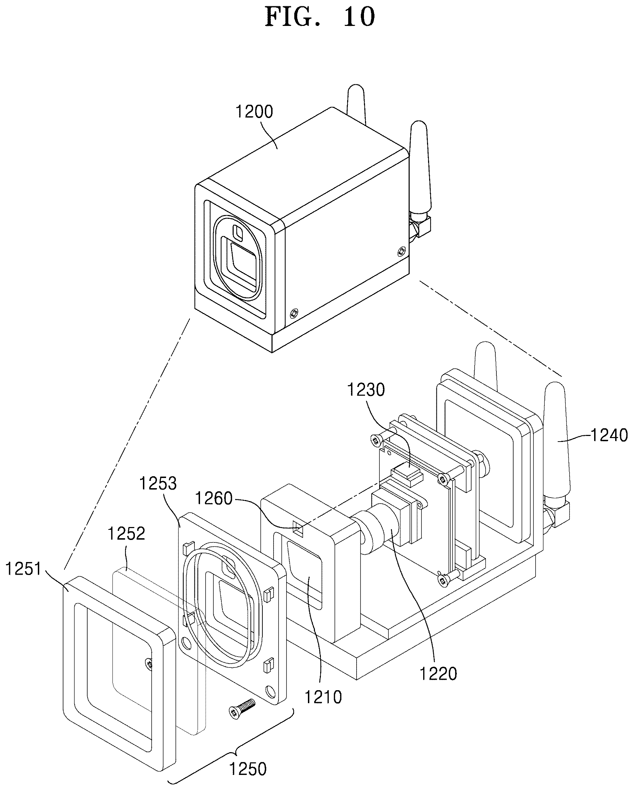

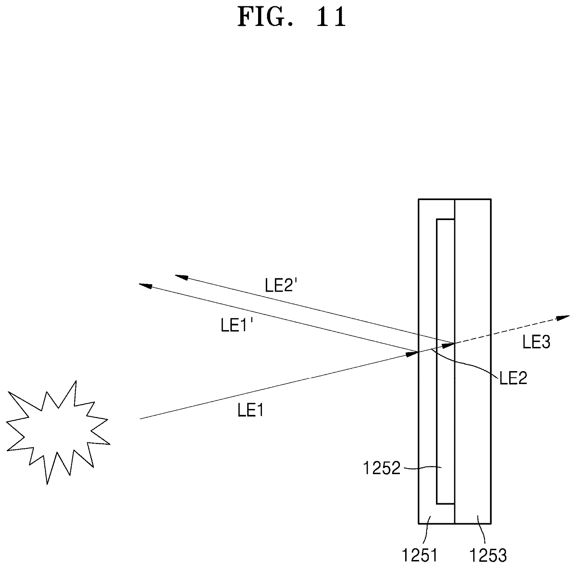

FIG. 10 is an exploded view of a camera system 1200 according to another embodiment, and FIG. 11 illustrates functions of the camera system 1200 of FIG. 10.

In the following description, parts redundant with the description of FIGS. 1 to 9 are briefly described or omitted.

Referring to FIG. 10, the camera system 1200 according to another embodiment may include a capturing unit, a shading unit 1210, a sensor unit 1230, a communication unit 1240, and a protection module 1250.

The capturing unit may be the capturing unit described above with reference to FIGS. 1 to 9.

The capturing unit may obtain a plurality of image frames. For example, the capturing unit may include a camera 1220 which includes a plurality of image frames.

In an embodiment, the capturing unit may further include a thermal imaging camera and may obtain a thermal image through the thermal imaging camera.

The capturing unit may include one camera 1220, but the disclosure is not limited thereto, and the capturing unit may include two or more cameras 1220.

The shading unit 1210 may control light which enters the camera system 1200. For example, the shading unit 1210 may be the shading unit described above with reference to FIGS. 1 to 9.

The shading unit 1210 may have a shading cartridge structure arranged between the camera 1220 and a light source and configured to control light which enters the camera 1220.

In an embodiment, the shading cartridge structure may include a blackening filter and an anti-reflection coating layer arranged on at least one surface of the blackening filter. In an optional embodiment, the shading cartridge structure may further include a neutral density filter arranged in front of the blackening filter.

Because the shading cartridge structure is arranged between the camera 1220 and the light source so as to have a slope, unnecessary light reflected from the lens inside the camera 1220 by strong light may be reduced.

The sensor unit 1230 may detect various pieces of information about a work area. For example, the sensor unit 1230 may be the sensor unit described above with reference to FIGS. 1 to 9.

The sensor unit 1230 may include a plurality of sensor modules which obtain various pieces of information about a work area.

In an embodiment, the sensor unit 1230 may measure information about light incident from the light source. For example, the sensor unit 1230 may include an illuminance sensor which detects the intensity of light within the work area (e.g., intensity of welding light, intensity of ambient light, etc.). The sensor unit 1230 may further include, in addition to the illuminance sensor, various types of sensors such as a proximity sensor, a noise sensor, a video sensor, an ultrasonic sensor, and an RF sensor, and may detect various changes related to a welding work environment.

In an embodiment, the sensor unit 1230 may detect, for example, welding information. The welding information may include, for example, a welding temperature, a welding direction, a welding slope, a welding speed, and a gap between a workpiece and a welding torch with respect to real-time welding work.

The communication unit 1240 may communicate with various external devices in accordance with various types of wired and wireless communication schemes. For example, the communication unit 1240 may be the communication unit described above with reference to FIGS. 1 to 9.

For example, the communication unit 1240 may include a wireless antenna to support wireless communication with an external device, but the disclosure is not limited thereto, and the communication unit 1240 may also support wired communication via a cable.

Although not illustrated, the camera system 1200 according to an embodiment may further include a processor. For example, the processor may be the processor described above with reference to FIGS. 1 to 9.

The processor may control various components of the camera system 1200. For example, as the welding light is detected through the sensor unit 1230, the processor may control at least one of a blackening filter, a neutral density filter, or a sensor filter 1260, which is included in the shading cartridge structure, based on the intensity of the welding light. However, the disclosure is not limited thereto, and the processor may generate various images based on the plurality of image frames obtained through the camera 1220, transmit the generated images to the external device, process the information detected by the sensor unit 1230, or transmit the detected information to the external device, as described above.

The protection module 1250 may be arranged in front of the shading unit 1210.

As an example, the protection module 1250 may protect the shading unit 1210 or the camera 1220.

For example, the protection module 1250 may be arranged in front of the shading unit 1210 and prevent physical impact from being applied to the shading unit 1210 or the camera 1220. In addition, the protection module 1250 may be arranged in front of the shading unit 1210 and prevent infiltration of foreign substances into the shading unit 1210 or the camera 1220.

In addition, the protection module 1250 may control light which enters from the light source to the shading unit 1210 or the camera 1220. For example, the protection module 1250 may be arranged in front of the shading unit 1210 and may reflect at least a portion of the light entering the shading unit 1210.

In an embodiment, the protection module 1250 may include a front frame 1251, a protection glass 1252, and a rear frame 1253.

The front frame 1251 may be arranged at the foremost side. For example, the front frame 1251 may be arranged in front of the protection glass 1252 and may protect the protection glass 1252.

In an embodiment, the front frame 1251 may have a hole formed in the center to fix the protection glass 1252. For example, the front frame 1251 may have a bezel shape. Accordingly, the protection glass 1252 may be fitted into the front frame 1251 so that the side surface or the like of the protection glass 1252 may be protected by the front frame 1251.

In an embodiment, the front frame 1251 may be formed to surround the periphery of the protection glass 1252 and overlap at least a portion of the front surface of the protection glass 1252. For example, the front frame 1251 may be formed to partially extend forward from the periphery of the protection glass 1252. To explain this from another viewpoint, the front frame 1251 may be formed in a shape in which the protection glass 1252 is inserted from the rear. Accordingly, after the protection glass 1252 is stably inserted into the front frame 1251, the protection glass 1252 may not unintentionally detach forward from the front frame 1251.

In an embodiment, the front frame 1251 may include a material which reflects at least a portion of light entering from the light source.

In an optional embodiment, the front frame 1251 may include a metal material. In a specific example, the front frame 1251 may be formed of one of silver (Ag), aluminum (Al), chromium (Cr), gold (Au), platinum (Pt), copper (Cu), and stainless steel, or may be formed of an alloy material including at least one thereof. In some embodiments, the front frame 1251 may be formed of a material including aluminum (Al), or may be formed of a material including an alloy including aluminum (Al).

Accordingly, the front frame 1251 may reflect at least a portion of light entering from the light source, and may also reflect heat caused by the light.

For example, the front frame 1251 may effectively reflect a heat-related component among components of light entering from the light source. For example, the front frame 1251 may reduce heat entering the protection module 1250 by reflecting infrared components of incoming light.

The protection glass 1252 is intended to prevent accidents such as sparks flying during welding work. As an example, a coating layer which prevents fogging or moisture may be formed of a hydrophilic coating material on the front surface of the protection glass 1252. The protection module 1250 may prevent the shading unit 1210 from being damaged by external foreign substances.

The protection glass 1252 may be arranged adjacent to the front frame 1251. For example, the protection glass 1252 may be inserted into the front frame 1251.

The rear frame 1253 may be arranged at the rear of the protection glass 1252 and may protect the protection glass 1252. For example, the rear frame 1253 may be arranged between the protection glass 1252 and the shading unit 1210.

The rear frame 1253 may have a hole formed in the center so that light having passed through the protection glass 1252 is transmitted therethrough.

In an embodiment, the rear frame 1253 may include a material which reflects at least a portion of light entering from the light source.

In an optional embodiment, the rear frame 1253 may include a metal material. In a specific example, the rear frame 1253 may be formed of one of silver (Ag), aluminum (Al), chromium (Cr), gold (Au), platinum (Pt), copper (Cu), and stainless steel, or may be formed of an alloy material including at least one thereof. In some embodiments, the rear frame 1253 may be formed of a material including aluminum (Al), or may be formed of a material including an alloy including aluminum (Al).

Accordingly, the rear frame 1253 may reflect at least a portion of light entering from the light source, and may also reflect heat caused by the light.

For example, the rear frame 1253 may effectively reflect a heat-related component among components of light entering from the light source. For example, the rear frame 1253 may reduce heat entering the protection module 1250 by reflecting infrared components of incoming light.

In an optional embodiment, the camera system 1200 may further include a sensor filter 1260.

The sensor filter 1260 may control the light which enters the sensor unit 1230.

The sensor filter 1260 may be arranged at a side of the shading unit 1210. For example, the sensor filter 1260 may be provided as a separate component to be detached from the shading unit 1210, or may be formed integrally with the shading unit 1210.

The sensor filter 1260 may be arranged on the same line as the sensor unit 1230 arranged at a side of the camera 1220, and may control light which enters the sensor unit 1230.

Hereinafter, the process in which light generated from the light source passes through the protection module 1250 is described with reference to FIG. 11.

Referring to FIG. 11, as light LE1 generated from a light source enters the protection module 1250, a portion of the light LE1 may be reflected from the protection module 1250, and a portion of the light LE1 may be partially transmitted through the protection module 1250.

At least some components LE1' of the light LE1 which enters from the light source through the protection module 1250 may be reflected by the front frame 1251. The remaining components LE2 of the light, from which some components LE1' are excluded, may be incident on the protection glass 1252. In this case, some components LE2' of the light LE2 having passed through the protection glass 1252 may be reflected by the rear frame 1253, and the remaining components LE3 may pass through the rear frame 1253.

Accordingly, because a portion of the light LE1 incident from the light source through the protection module 1250 is reflected by the front frame 1251 and the rear frame 1253, welding heat transmitted to the camera 1220 may be reduced, compared to the case where all components of the light LE1 are incident on the shading unit 1210.

As such, the camera system according to an embodiment has an effect of reducing glare or heat caused by light by reflecting at least a portion of light incident from the light source.

In addition, because the camera system according to an embodiment includes the blackening filter and the neutral density filter, the camera system may control the blackening density or the neutral density according to the presence or absence of welding light or the intensity of welding light, and thus, a welding image with a certain amount of welding light shielded may be provided without processing a separately captured welding image.

The disclosure may provide a camera system capable of controlling intensity of a strong light source of welding light entering a device.

However, such an effect is only an example, and the effect of the disclosure is not limited thereto.

However, the above effects are only examples of the effects of the disclosure, and it is obvious that the disclosure may further have various effects exerted by the components described above.

The disclosure may be applied to various systems capable of identifying a welding state by transmitting welding information to a welding monitoring device or the like, and may also be applied to a welding helmet which may be wearable by a worker, an automatic welding robot, or the like. Furthermore, the disclosure may be applied to monitoring devices in various work environments with poor usage environments.

The disclosure has been described with reference to the embodiments illustrated in the drawings, but this is only an example. It will be understood by those of ordinary skill in the art that various modifications and equivalents may be made thereto. Therefore, the true technical protection scope of the disclosure should be defined by the technical concept of the appended claims.

Specific executions described in the embodiments are one embodiment, which does not limit the scope of the embodiments in any way. For the sake of conciseness of the specification, descriptions of conventional electronic components, control systems, software, and other functional aspects of the systems may be omitted. In addition, connecting lines or connecting members illustrated in the drawings are intended to represent example functional connections and/or physical or circuit connections. In an actual device, it may appear as a variety of alternative or additional functional, physical, or circuit connections. In addition, when there is no specific mention such as "essential" or "important," it may not be a necessary component for the application of the disclosure.

The use of the term "the" and similar demonstratives in the specification of the embodiments (in particular, the claims) is to be construed to cover both the singular and the plural. Furthermore, when a range is described in the embodiments, it includes the invention to which individual values within the range are applied (unless otherwise indicated herein). This is the same as stating each individual value constituting the above range in the detailed description. Finally, operations constituting methods according to embodiments may be performed in any suitable order unless otherwise indicated herein or otherwise clearly contradicted by context. The embodiments are not necessarily limited by the order of description of operations. The use of any and all examples or exemplary terms (e.g., "such as") provided in the embodiments is simply intended to describe the embodiments in detail, and the scope of the embodiments is not limited by the examples or exemplary terms unless otherwise claimed. In addition, it will be understood by those of ordinary skill in the art that various modifications, combinations and changes may be made according to design conditions and factors within the scope of the appended claims or equivalents thereof.

## Claims

1. A camera system comprising:
a capturing unit comprising a camera configured to obtain a plurality of image frames;
a shading unit comprising a shading cartridge structure arranged between the camera and a light source and configured to control light entering the camera; and
a protection module arranged in front of the shading unit and configured to protect the shading unit and the camera and reflect at least a portion of light entering from the light source to the shading unit.

2. The camera system of claim 1, wherein the protection module comprises:
a front frame arranged at a foremost side;
a protection glass arranged adjacent to the front frame; and
a rear frame arranged between the protection glass and the shading unit.

3. The camera system of claim 2, wherein the front frame comprises a material which reflects at least a portion of the light entering from the light source.

4. The camera system of claim 2, wherein the rear frame comprises a material which reflects at least a portion of the light entering from the light source.

5. The camera system of claim 1, further comprising:
a sensor unit configured to measure information about light entering from the light source; and
a sensor filter arranged at a side of the shading unit and configured to control the light entering the sensor unit.
